# EUROPÄISCHE PATENTSCHRIFT

(11) **EP 1 263 250 B1**
(45) Veröffentlichungstag und Bekanntmachung des Hinweises auf die Patenterteilung: **24.03.2004**
(21) Anmeldenummer: 01890171.0
(22) Anmeldetag: 01.06.2001
(51) Int. Cl.: H04Q 7/38

(54) **Verfahren zur Bestimmung des Standortes einer Mobilstation in einem Mobilfunksystem**
Method to determine the location of a mobile station in a mobile radio system
Méthode pour déterminer la position d'une station mobile dans un système de radiocommunication mobile

(43) Veröffentlichungstag der Anmeldung: 04.12.2002
(73) Patentinhaber: Mobilkom Austria Aktiengesellschaft & Co KG, 1020 Wien (AT)
(72) Erfinder: Heger, Michael, 1180 Wien (AT); Rokita, Ulrich, Dipl.-Ing., 2380 Perchtoldsdorf (AT)
(74) Vertreter: Weiser, Andreas, Dipl.-Ing.

(56) Entgegenhaltungen:
- EP-A- 0 431 956
- DE-A- 19 533 472
- JUNIUS M ET AL: "NEW METHODS FOR PROCESSING GSM RADIO MEASUREMENT DATA: APPLICATIONS FOR LOCATING, HANDOVER AND NETWORK MANAGEMENT" PROCEEDINGS OF THE VEHICULAR TECHNOLOGY CONFERENCE. STOCKHOLM, JUNE 8 - 10, 1994, NEW YORK, IEEE, US, Bd. 1 CONF. 44, 8. Juni 1994 (1994-06-08), Seiten 338-342, XP000496691

## Beschreibung

Die vorliegende Erfindung betrifft ein Verfahren zur Bestimmung des Standortes einer Mobilstation in einem Mobilfunksystem nach dem GSM-Standard auf Anforderung einer mit dem Mobilfunksystem kommunizierenden Applikation,
welches Mobilfunksystem eine oder mehrere Basisstationen, eine Heimatdatenbank, eine oder mehrere Besucherdatenbanken für in deren Dienstbereich eingemeldete Mobilstationen und zumindest eine Betriebs- und Wartungszentrale aufweist, die Funkübertragungsparameter der mit den Mobilstationen aufgebauten Verbindungen zur Verfügung hat,
wobei jede Mobilstation eine Mobilstationskennung hat und jeder mit ihr aufgebauten Verbindung eine Verbindungskennung temporär zugeordnet wird.

Der GSM-Standard ist in den Empfehlungen des ETSI (European Telecommunications Standards Institute) definiert, siehe beispielsweise ETSI-Empfehlung GSM 01.02 zur Architektur des GSM-Systems bzw. ETSI-Empfehlung GSM 01.04 zu den Abkürzungen und Akronymen des GSM-Systems.

Im Zuge der Entwicklung ortsabhängiger Dienstleistungen ("location based services") in Mobilfunksystemen besteht ein ungebrochener Bedarf nach Verfahren zur möglichst genauen Ortung einer Mobilstation. Applikationen, die solche ortsabhängigen Dienste anbieten oder benötigen und zu diesem Zweck entsprechende Standortbestimmungsanforderungen an das Mobilfunksystem absetzen, sind beispielsweise computergestützte Adressoder Branchendatenbanken, aus denen der Benutzer ortsabhängige Daten abrufen möchte wie die nächstgelegene Tankstelle, Stadtpläne mit sog. POI-Informationen ("points of interest") usw., oder Computerprogramme, die von sich aus dem Benutzer ortsabhängige Daten anbieten, z.B. Informationen über seinen aktuellen Standort oder ortsbezogene Werbebotschaften. Die Verbindung zwischen Mobilstation und Applikation kann dabei über Sprachruf und sprach- bzw. DTMF-gesteuerte Sprachantwortsysteme oder Datenruf wie SMS, E-Mail, WAP oder Internet usw. erfolgen.

Bekannte Algorithmen zur Standortbestimmung verwenden in der Regel die Übertragungsparameter der Funkschnittstelle der Mobilstation als Berechnungsgrundlage. Ein solcher Satz von Funkübertragungsparametern ist als Meßdatensatz in den ETSI-Empfehlungen GSM 04.08/DCS (Schicht 3) und GSM 05.08/DCS (Meßdatensatz) definiert und umfaßt im wesentlichen folgende Parameter:
1. Zellidentifikation der verbindungsführenden Zelle (cell ID serving cell),
2. Funksignallaufzeit (timing advance, TA) der verbindungsführenden Zelle (serving cell),
3. Empfangspegel der verbindungsführenden Zelle (Rx level serving cell),
4. Broadcast-Steuerkanal (broadcast control channel, BCCH) und Basissendeempfangsstationskennung (base transceiver station identity code, BSIC) der empfangbaren Nachbarzellen (woraus mit Hilfe der Handoverliste die Zellidentifikation der Nachbarzellen bestimmbar ist), und
5. Empfangspegel der Nachbarzellen (Rx level cellᵢ).

Dieser Meßdatensatz ist in der Mobilstation während des Bestehens einer Verbindung verfügbar und auslesbar. Ein Gruppe von bekannten Verfahren zur Standortbestimmung beruht daher auf der Verwendung speziell programmierter SIM-Karten in der Mobilstation, welche auf Fernanforderung der Applikation den Meßdatensatz aus der Mobilstation auslesen und in Form einer SMS an die Applikation zurücksenden.

Die Implementierung einer solchen Lösung in bestehenden Netzen ist ausgesprochen aufwendig, da ältere Mobilstationen entweder gar nicht mit programmierbaren SIM-Karten ausgestattet sind, was ein Austauschen der alten SIM-Karten gegen neue speicherprogrammierbare SIM-Karten erfordert, oder aber bestehende Mobilstationen mit neuen speicherprogrammierbaren SIM-Karten müssen einer entsprechenden Fernprogrammierung unterzogen werden. Darüber hinaus ist das Einholen der Standortdaten über SMS mit einer verkehrsabhängigen Verzögerung behaftet, was im Einzelfall zu ungebührlichen Wartezeiten oder einer fehlgeschlagenen Standortbestimmung führen kann.

Eine andere Gruppe von Verfahren, bekannt unter dem Namen "enhanced observed time difference" (EOTD), verwendet speziell adaptierte Basissendeempfangsstationen, welche die beobachteten Funkübertragungsparameter an die Applikation berichten. Der Nachteil dabei ist, daß die Basissendeempfangsstationen entsprechend umgerüstet oder ausgelegt werden müssen.

EP-A 0 431 956 offenbart ein Verfahren, in dem eine Basisstation Messdaten zur Positionsbestimmung von Mobilstationen an einen zentralen Knoten weiterreicht.

Die Erfindung setzt sich zum Ziel, ein Verfahren der eingangs genannten Art zu schaffen, mit welchem eine Standortbestimmung ohne Umrüstung der bestehenden Mobilstationen und Basissendeempfangsstationen möglich ist. Dieses Ziel wird mit einem Verfahren der einleitend genannten Art erreicht, das sich erfindungsgemäß dadurch auszeichnet, daß mit Hilfe eines an das Mobilfunksystem angeschlossenen Computersystems die folgenden Schritte ausgeführt werden:
a) Empfangen einer Standortbestimmungsanforderung für eine Mobilstationskennung von der Applikation,
b) Senden der Mobilstationskennung an die jeweilige über die Heimatdatenbank bestimmte Besucherdatenbank, in der die Mobilstation eingemeldet ist, als Anforderung zur Rückgabe der zugeordneten Verbindungskennung und Empfangen derselben,
c) Senden der Verbindungskennung an die Betriebs- und Wartungszentrale als Anforderung zur Rückgabe der Funkübertragungsparameter der zugeordneten Verbindung und Empfangen der Funkübertragungsparameter, und
d) Ermitteln des Standortes aus den empfangenen Funkübertragungsparametern und Senden des Standortes an die Applikation.

Die Erfindung beruht auf der Erkenntnis, daß die Betriebsund Wartungszentrale im Rahmen ihrer Funktion des Überwachens der Netzwerkauslastung und Konfigurierens der Basissendeempfangsstationen über die Funkübertragungsparameter der angeschlossenen Basissendeempfangsstationen verfügt, allerdings noch nicht ohne weiteres zuordenbar zu den verbindungsführenden Mobilstationen. Die Erfindung schafft unter Verwendung einer neuartigen Zusammenschaltung der Betriebs- und Wartungszentrale mit der Heimatdatenbank (home location register, HLR) und den Besucherdatenbanken (visitor location registers, VLR) der Mobilvermittlungzentralen (mobil services swiching centers, MSC) des Mobilfunknetzes ein neuartiges Verfahren, wonach anhand der der Applikation bekannten Mobilstationskennung (mobile station-ISDN bzw. MSISDN), welche der über das Telephonnetz übertragenen Telephonnummer des Anrufers entspricht, jene temporäre Verbindungskennung (temporary mobile subscriber number, TMSI) ermittelt wird, mit welcher die Betriebs- und Wartungszentrale (operation maintenance center, OMC) adressierbar und die Funkübertragungsparameter der zugehörigen Verbindung auslesbar sind.

Auf diese Weise braucht lediglich die in einem Mobilfunksystem nach dem GSM-Standard nur einmal oder in wenigen Exemplaren implementierte Betriebs- und Wartungszentrale OMC für den genannten Auslesevorgang adaptiert werden. Das erfindungsgemäße Verfahren erübrigt eine kostenaufwendige Adaptierung der Mobilstationen im Feld oder eine gleichermaßen aufwendige Adaptierung der Basissendeempfangsstationen.

Die Applikation könnte die Mobilstationskennung von einer anderen Applikation oder einem Eingabeterminal erhalten; besonders vorteilhaft ist es jedoch, wenn die genannte Verbindung mit der Applikation selbst geführt wird, sodaß die Funkübertragungsparameter ebendieser Verbindung der Standortbestimmung zugrunde gelegt werden.

In einer vorteilhaften Ausführungsform der Erfindung umfassen die genannten Funkübertragungsparameter die Funksignallaufzeit, den Empfangspegel und die Zellidentifikation der verbindungsführenden Zelle, und bevorzugt auch die Empfangspegel und Zellidentifikationen der von der Mobilstation empfangbaren Nachbarzellen.

Algorithmen zur Standortbestimmung auf Grundlage dieser Parameter sind in großer Zahl dokumentiert und dem Fachmann bekannt. Insbesondere werden bevorzugt die genannten Funkübertragungsparameter aus dem Schicht-3-Meßdatensatz der Mobilstation-Funkschnittstelle des GMS-Standards erhalten, sodaß auch Algorithmen nach dem GSM-Standard (z.B. GSM TS 03.71 Location Services u.a.) eingesetzt werden können.

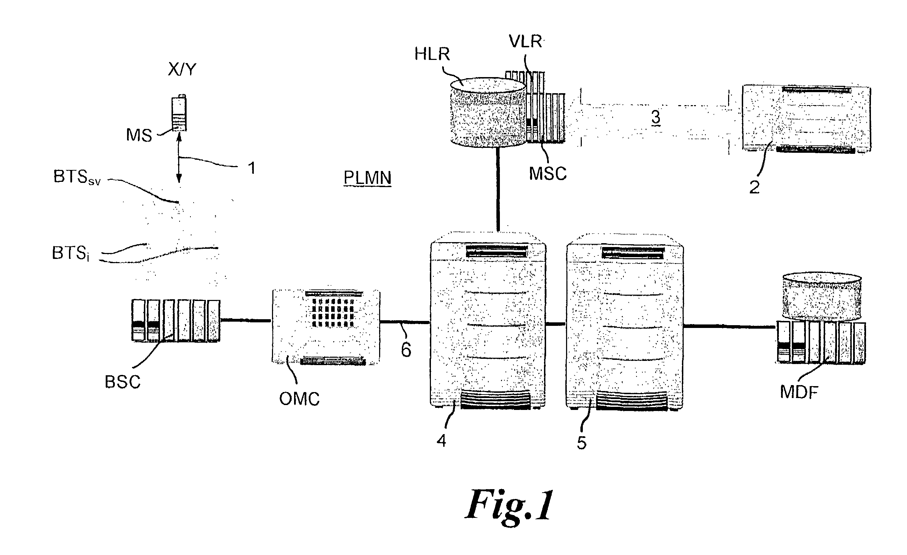

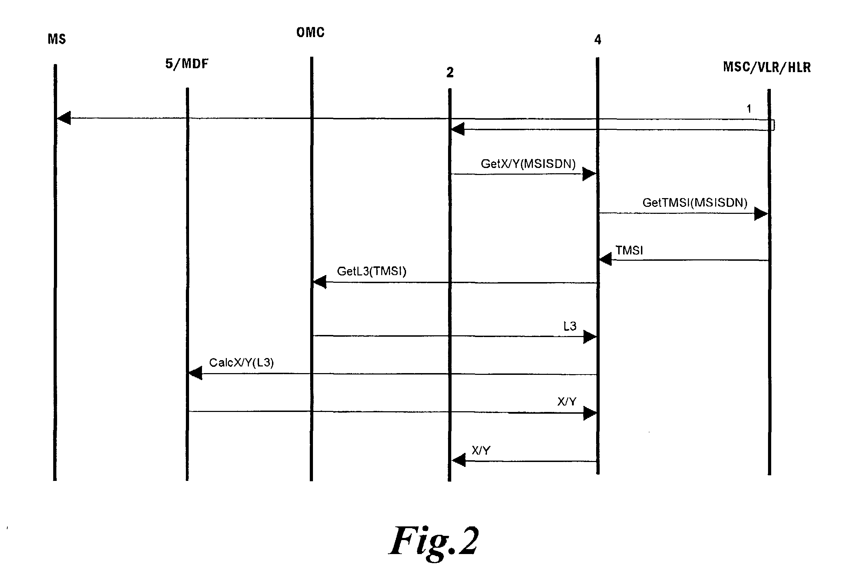

Die Erfindung wird nachstehend anhand eines in den Zeichnungen dargestellten Ausführungsbeispieles näher erläutert. In den Zeichnungen zeigt Fig. 1 ein schematisches Blockschaltbild der zur Ausführung des erfindungsgemäßen Verfahrens erforderlichen Komponenten und Fig. 2 ein Sequenzdiagramm des erfindungsgemäßen Verfahrens.

In Fig. 1 sind einige der Komponenten eines Mobilfunksystems PLMN nach dem GSM-Standard in Verbindung mit zusätzlichen Komponenten, welche ausschließlich zur Ausführung des erfindungsgemäßen Verfahrens dienen, dargestellt. Hinsichtlich einer genauen Beschreibung des GSM-Standards wird auf die Publikationen des ETSI (European Telecommunications Standard Institut) verwiesen, insbesondere GSM 01.02 (Architektur des GSM-Systems), GSM 01.04 (Abkürzungen und Akronyme, Definition der Komponenten BTS, BST, MSC, HLR, VLR, OMC usw.), GSM 02.17 (SIM), GSM 03.03 (BSIC), GSM 04.08/DCS (Layer 3), GSM 05.08/DCS (Meßdatensatz), GSM 11.11 und 11.14 (SIM Application Toolkit), GSM 11.20 (BTS), GSM 11.30 (MSC), GSM 11.31 (HLR), GSM 11.32 (VLR) und GSM 12.07 (OMC). Weitere hier relevante Normen sind TS 43.059 (LCS), TS 03.71 (Location Services Stage 2 R1999 version 8.0.0), 04.31 (Location Services RR LCS Protocol R1999 8.1.0), 04.35 (Location Services Stage 3 E-OTD Enhanced Observed R1999 8.2.0), 04.71 Location services stage 3 R1999 8.1.0), 08.31 (Location Services SMLC Peer Protocol R1999 8.0.0), 08.71 (Location services SMLC-BSS interface L 3 R1999 8.1.0), 09.31 (Location Services Extension (BSSAP-LE) R1999 8.3.0).

Wie im GSM-Standard definiert, umfaßt das Mobilfunksystem PLMN eine oder mehrere Mobilvermittlungszentralen MSC, die in ihrem Dienstbereich jeweils eine oder mehrere Basisstationssteuerungen (base station controllers) BSC bedienen, welche ihrerseits eine oder mehrere Basissendeempfangsstationen (base transceiver stations) BTS bedienen. Die Basissendeempfangsstationen BTS versorgen jeweils eine Funkzelle (im weiteren auch Zelle genannt) des Mobilfunksystems.

Mobilstationen (mobile stations) MS befinden sich jeweils in einer Zelle, können dort aber Signale nicht nur von der dieser Zelle zugeordneten Basissendeempfangsstation BTS empfangen, im weiteren BTS_{SV} genannt, sondern gegebenenfalls auch von einer oder mehreren weiteren Basissendeempfangsstationen BTSᵢ (i = 1...N), die den Nachbarzellen der verbindungsführenden Zelle (serving cell) zugeordnet sind. Beim Übertritt einer Mobilstation MS von einer Zelle in die Nachbarzelle wird in an sich bekannter Weise ein Handover durchgeführt, sodaß die Nachbarzelle nun zur neuen verbindungsführenden Zelle wird. Die Verbindung der Mobilstation MS mit der Basissendeempfangsstation BTS_{SV} der verbindungsführenden Zelle ist in Fig. 1 mit 1 bezeichnet.

Die Mobilstationen MS enthalten eine bevorzugt austauschbare Speicherkarte (subscriber identification modul, SIM), welche der eigentliche Speicherort der Daten der Mobilstation MS, wie ihrer Mobilstationskennung MSISDN, der Teilnehmerkennung (international mobile subscriber identity) IMSI und weiterer relevanter Daten der Mobilstation ist.

Das Mobilfunksystem PLMN besitzt eine Heimatdatenbank HLR für Stammdaten der Mobilstationen MS (genauer: deren SIMs), wie die Mobilstationskennung MSISDN, sowie die Teilnehmerkennung IMSI und aktuelle Dienstbereich-Aufenthaltsdaten der Mobilstation (z.B. location area code, LAC; mobile station roaming number, MSRN), welche Aufschluß darüber geben, im Dienstbereich welcher Mobilvermittlungsstelle MSC sich die Mobilstation MS gerade befindet. Darüber hinaus ist jeder Mobilvermittlungsstelle MSC eine Besucherdatenbank VLR zugeordnet, welche bei Aufenthalt einer Mobilstation MS (genauer: einer SIM) in ihrem Dienstbereich eine Kopie der Stammdaten von der Heimatdatenbank HLR erhält und aktuelle Verbindungsdaten speichert, insbesondere eine Verbindungskennung (temporary mobile subscriber number) TMSI, welche eine Art verschlüsselter Version der Teilnehmerkennung IMSI darstellt, wobei die Verschlüsselung jeweils der zwischen der Mobilstation MS und der Basissendeempfangsstation BTS_{SV} aufgebauten Verbindung 1 zugeordnet ist.

Das Mobilfunksystem PLMN ist ferner mit einer oder mehreren Betriebs- und Wartungszentralen OMC ausgestattet, welche in bekannter Weise einerseits für die Verwaltung der kommerziellen Operationen des Netzes zuständig sind, wie Teilnehmerdatenpflege, Statistiken und Verrechnung, und anderseits für Überwachungs-, Wartungs- und Optimierungsaufgaben des Netzes, insbesondere die Optimierung der Netzwerkauslastung. Diese Funktionen können auf mehrere Betriebs- und Wartungszentralen aufgeteilt sein und die in Fig. 1 dargestellte Betriebs- und Wartungszentrale OMC ist für Netzwerkauslastungsmessungen auf Grundlage von Daten der Basisstationssteuerungen BSC und Basissendeempfangsstationen BTS ausgebildet. Zu diesem Zweck ist die Betriebs- und Wartungszentrale OMC direkt an die Basisstationssteuerungen BSC angeschlossen.

In Fig. 1 ist ferner eine Applikation 2 dargestellt, welche über eine Sprach- oder Datenverbindung 3 mit dem Mobilfunksystem PLMN kommuniziert. Die Sprach- oder Datenverbindung 3 kann auf beliebige Weise gestaltet sein, beispielsweise über einen Sprachkanal im öffentlichen Telephonnetz und/oder Mobilfunksystem, über einen Datenkanal darin (z.B. SMS, WAP), über das Internet oder über ein Intranet des Mobilfunksystems usw.

Die Applikation selbst kann ein Internetserver, ein Sprachantwortsystem (voice response unit, VRU), ein Task auf einem beliebigen Rechner, ja sogar ein Task auf einer der Komponenten des Mobilfunksystems PLMN selbst sein, usw.

Die Applikation 2 möchte den Standort der die Verbindung 1 unterhaltenden Mobilstation MS bestimmen und setzt zu diesem Zweck eine Standortbestimmungsanforderung über die Sprach/Daten-Verbindung 3 an das Mobilfunksystem PLMN ab, wie weiter unten noch näher erläutert wird. Die Verbindung 1, welche die Mobilstation mit der Basissendeempfangsstationen BTS_{SV} unterhält, wird bevorzugt gerade mit der Applikation 2 geführt, was über die Sprach/Daten-Verbindung 3 erfolgen kann.

Die von der Applikation 2 abgesetzte Standortbestimmungsanforderung wird von einem Computersystem 4, 5 verarbeitet, welches an das Mobilfunksystem PLMN angeschlossen ist. Das Computersystem 4, 5 steht zumindest mit der Betriebs- und Wartungszentrale OMC, der Heimatdatenbank HLR, über die Mobilvermittlungszentralen MSC mit den Besucherdatenbanken VLR und mit einer eigenen Netz- und Topologiedatenbank MDF in Verbindung. Die Datenbank MDF enthält Daten über die geographische und funktechnische Topologie des Mobilfunksystems PLMN, so z.B. die Koordinaten aller Basissendeempfangsstationen BTS, die Leistung, die Montagehöhe, die Hauptstrahlrichtung (Azimuth), die Absenkung (Elevation) und das Antennendiagramm der Antennenanlage, die geographische und infrastrukturelle Topologie der Zelle usw.

Im gezeigten Beispiel ist das Computersystem 4, 5 in zwei Rechner unterteilt, und zwar einen ersten Rechner 4, welcher den Funkmeßdatensatz ermittelt und zusammenstellt, aus dem ein zweiter Rechner 5 mit Hilfe an sich bekannter Algorithmen unter Verwendung der Daten der Datenbank MDF den Standort berechnet.

Das mit Hilfe des Computersystems 4, 5 von Fig. 1 ausgeführte Verfahren wird nun anhand des Sequenzdiagrammes von Fig. 2 näher erläutert.

Fig. 2 geht von der Situation aus, daß eine Verbindung 1 zwischen der Mobilstation MS und der Applikation 2 über das Mobilfunksystem PLMN, genauer das Zusammenwirken von Mobilvermittlungszentrale MSC, Heimatdatenbank HLR und Besucherdatenbank VLR besteht. Alternativ könnte die Verbindung 1 auch zwischen der Mobilstation MS und einer beliebigen anderen Komponente als der Applikation 2 geführt werden.

Im Zuge der bestehenden Verbindung 1 oder danach oder auf Veranlassung durch jene andere Komponente, mit der die Verbindung 1 besteht, oder auf eigene Veranlassung, z.B. zeitgesteuert, setzt die Applikation 2 eine Standortbestimmungsanforderung "GetX/Y" für eine bestimmte Mobilstationskennung MSISDN an den Rechner 4 des Computersystems 4, 5 ab. Wenn die Verbindung 1 mit der Applikation 2 selbst geführt wird, verfügt die Applikation 2 bereits über die Mobilstationskennung MSISDN, da diese als Anruferidentifikation über das Mobilfunksystem bzw. das Telephonnetz übertragen wird. Alternativ kann die Applikation 2 die Mobilstationskennung MSISDN von einer anderen Komponente erhalten oder, wenn die Standortbestimmungsanforderung aus eigener Veranlassung erfolgt, aus einer entsprechenden Datenbank ermitteln.

Der Rechner 4 sendet die Mobilstationskennung MSISDN im Rahmen einer an das Mobilfunksystem PLMN abgesetzten Anforderung "GetTMSI" zur Rückgabe der der Mobilstationskennung MSISDN zugeordneten Verbindungskennung TMSI weiter. Genauer wird mit Hilfe der Mobilstationskennung MSISDN aus der Heimatdatenbank HLR jene Besucherdatenbank VLR ermittelt, welche derjenigen Mobilvermittlungszentrale MSC zugeordnet ist, zu deren Dienstbereich die Basissendeempfangsstation BTS_{SV} gehört, über welche die Mobilstation MS die Verbindung führt (d.h. jene Besucherdatenbank VLR, in der die Mobilstation eingemeldet ist), und aus dieser Besucherdatenbank VLR wird die der aktuellen Verbindung zugeordnete Verbindungskennung TMSI ermittelt. Die Verbindungskennung TMSI wird an den Rechner 4 zurückgegeben.

Der Rechner 4 sendet nun die erhaltene Verbindungskennung TMSI an die für die verbindungsführende Basissendeempfangsstation BTS_{SV} zuständige Betriebs- und Wartungszentrale OMC über einen eigens eingerichteten Datenpfad 6 (Fig. 1) in Form einer Anforderung "GetL3" zur Rückgabe eines Meßdatensatzes von Funkübertragungsparametern L3 für die Verbindung 1. Die Betriebs- und Wartungszentrale OMC sendet im nächsten Schritt die Funkübertragungsparameter L3 an den Rechner 4 zurück.

Die erhaltenen Funkübertragungsparameter sind bevorzugt jener Meßdatensatz, welcher der Schicht 3 der Funkschnittstelle zwischen Mobilstation MS und Basissendeempfangsstation BTS entspricht, wie sie in den ETSI-Standards GSM 04.08/DCS und GSM 05.08/DCS definiert ist und umfaßt:
1. Zellidentifikation der verbindungsführenden Zelle (cell ID serving cell),
2. Funksignallaufzeit (timing advance, TA) der verbindungsführenden Zelle (serving cell),
3. Empfangspegel der verbindungsführenden Zelle (Rx level serving cell),
4. Broadcast-Steuerkanal (broadcast control channel, BCCH) und Basissendeempfangsstationskennung (base transceiver station identity code, BSIC) der empfangbaren Nachbarzellen (woraus mit Hilfe der Handoverliste die Zellidentifikation der Nachbarzellen bestimmbar ist), und
5. Empfangspegel der Nachbarzellen (Rx level cellᵢ).

Der Pfad 6 kann beispielsweise durch eine Telnet-Session zwischen der Betriebs- und Wartungszentrale OMC und dem Rechner 4 gebildet sein. Zu diesem Zweck wird eine herkömmliche, nach dem ETSI-Standard GSM 12.07 ausgebildete Betriebs- und Wartungszentrale OMC mit einem Schnittstellentask ausgestattet, welcher z.B. über Telnet "GetL3"-Anforderungen entgegennimmt, verarbeitet und die Funkübertragungsparameter L3 ausliest und zurückgibt.

Anhand der ermittelten Funkübertragungsparameter L3 kann nun mit Hilfe jedes in der Technik bekannten Standortberechnungsverfahrens der Standort X/Y der Mobilstation MS berechnet werden. Die Standortberechnungsverfahren bzw. -algorithmen werden bevorzugt auf den gesonderten Rechner 5 ausgelagert, sodaß im letzten Schritt von Fig. 2 eine ensprechende Standortberechnunsanforderung "CalcX/Y" an den Rechner 5 abgesetzt und von diesem mit der Rückgabe des Standorts X/Y beantwortet wird. Schließlich gibt der Rechner 4 den ermittelten Standort X/Y an die Applikation 2 zurück.

Bekannte verwendbare Standortberechnungsverfahren bzw. -algorithmen sind beispielsweise das Verfahren von Nokia, welches die Zellidentifikationen (cell ID) des Meßdatensatzes L3 auswertet, das Verfahren von Ericsson, das die Zellidentifikation (cell ID) und die Funksignallaufzeit (TA) auswertet, oder das Triangulierungsverfahren von Alcatel, welches zusätzlich die Empfangspegel der Nachbarzellen (Rₓ level cellᵢ) auswertet.

Die Erfindung ist selbstverständlich nicht auf die dargestellten Ausführungsformen beschränkt sondern umfaßt alle Modifikationen und Variationen, die in den Rahmen der angeschlossenen Ansprüche fallen.

## Patentansprüche

1. Verfahren zur Bestimmung des Standortes (X/Y) einer Mobilstation (MS) in einem Mobilfunksystem (PLMN) nach dem GSM-Standard auf Anforderung einer mit dem Mobilfunksystem (PLMN) kommunizierenden Applikation (2),
welches Mobilfunksystem (PLMN) eine oder mehrere Basisstationen (BSC/BTS), eine Heimatdatenbank (HLR), eine oder mehrere Besucherdatenbanken (VLR) für in deren Dienstbereich eingemeldete Mobilstationen (MS) und zumindest eine Betriebs- und Wartungszentrale (OMC) aufweist, die Funkübertragungsparameter (L3) der mit den Mobilstationen (MS) aufgebauten Verbindungen zur Verfügung hat,
wobei jede Mobilstation (MS) eine Mobilstationskennung (MSISDN) hat und jeder mit ihr aufgebauten Verbindung eine Verbindungskennung (TMSI) temporär zugeordnet wird,
**dadurch gekennzeichnet, daß** mit Hilfe eines an das Mobilfunksystem (PLMN) angeschlossenen Computersystems (4, 5) die folgenden Schritte ausgeführt werden:
a) Empfangen einer Standortbestimmungsanforderung für eine Mobilstationskennung (MSISDN) von der Applikation (2),
b) Senden der Mobilstationskennung (MSISDN) an die jeweilige über die Heimatdatenbank (HLR) bestimmte Besucherdatenbank (VLR), in der die Mobilstation (MS) eingemeldet ist, als Anforderung zur Rückgabe der zugeordneten Verbindungskennung (TMSI) und Empfangen derselben,
c) Senden der Verbindungskennung (TMSI) an die Betriebsund Wartungszentrale (OMC) als Anforderung zur Rückgabe der Funkübertragungsparameter (L3) der zugeordneten Verbindung und Empfangen der Funkübertragungsparameter (L3), und
d) Ermitteln des Standortes (X/Y) aus den empfangenen Funkübertragungsparametern (L3) und Senden des Standortes (X/Y) an die Applikation (2).

2. Verfahren nach Anspruch 1, **dadurch gekennzeichnet, daß** die genannte Verbindung zwischen Mobilstation (MS) und Applikation (2) geführt wird.

3. Verfahren nach Anspruch 1 oder 2, **dadurch gekennzeichnet, daß** die genannten Funkübertragungsparameter die Funksignallaufzeit (TA), den Empfangspegel (Rx_{SV}) und/oder die Zellidentifikation (CI_{SV}) der verbindungsführenden Zelle umfassen.

4. Verfahren nach Anspruch 3, **dadurch gekennzeichnet, daß** die genannten Funkübertragungsparameter auch die Empfangspegel (Rxᵢ) und Zellidentifikationen (CIᵢ) der von der Mobilstation (MS) empfangbaren Nachbarzellen umfassen.

5. Verfahren nach Anspruch 3 oder 4, **dadurch gekennzeichnet, daß** die genannten Funkübertragungsparameter (L3) aus dem Schicht-3-Meßdatensatz (L3) der Mobilstation-Funkschnittstelle des GMS-Standards erhalten werden.

## Claims

1. A method of determining the location (X/Y) of a mobile station (MS) in a mobile radiocommunication system (PLMN) conforming to the GSM standard at the request of an application (2) communicating with the mobile radiocommunication system (PLMN),
which mobile radiocommunication system (PLMN) comprises one or more base stations (BSC/BTS), a home location register (HLR), one or more visitor location registers (VLR) for mobile stations (MS) logged into their serving area and at least one operation maintenance centre (OMC) having access to radio transmission parameters (L3) for the connections established with the mobile stations (MS),
each mobile station (MS) being provided with a mobile station identifier (MSISDN), and a connection identifier (TMSI) being temporarily assigned to each connection established therewith,
**characterized in that**
the following steps are carried out with the aid of a computer system (4, 5) connected to the mobile radiocommunication system (PLMN):
a) receiving a location request for a mobile station identifier (MSISDN) from the application (2),
b) transmitting the mobile station identifier (MSISDN) to the relevant visitor location register (VLR) into which the mobile station (MS) is logged, as determined by the home location register (HLR), as a request for the return of the mobile subscriber identifier (TMSI) assigned thereto, and receiving the same,
c) transmitting the mobile subscriber identifier (TMSI) to the operation maintenance centre (OMC) as a request for the return of the radio transmission parameters (L3) of the connection assigned thereto and receiving the radio transmission parameters (L3), and
d) ascertaining the location (X/Y) from the received radio transmission parameters (L3) and transmitting said location (X/Y) to the application (2).

2. The method defined in claim 1, **characterized in that** the said connection is established between the mobile station (MS) and the application (2).

3. The method defined in claim 1 or claim 2, **characterized in that** said radio transmission parameters comprise the timing advance (TA), the received signal level (Rxₛᵥ) and/or the cell identification (CIₛᵥ) of the serving cell.

4. The method defined in claim 3, **characterized in that** said radio transmission parameters also include the received signal levels (Rxᵢ) and cell identifications (CIᵢ) of the adjacent cells receivable by the mobile station (MS).

5. The method defined in claim 3 or claim 4, **characterized in that** said radio transmission parameters (L3) are obtained from the layer 3 set of measurement reporting parameters of the mobile station radio interface according to the GMS standard.

## Revendications

1. Procédé pour la détermination de la position (X/Y) d'une station mobile (MS) dans un système de radiocommunication mobile (PLMN) selon la norme GMS sur la demande d'une application (2) communiquant avec le système de radiocommunication mobile (PLMN),
lequel système de radiocommunication mobile (PLMN) présente une ou plusieurs stations de base (BSC/BTS), une banque de données d'origine (HLR), une ou plusieurs banques de données de visiteurs (VLR) pour les stations mobiles (MS) enregistrées dans leur zone de service et au moins une centrale d'exploitation et d'entretien (OMC), qui dispose de paramètres de transmission radio (L3) des liaisons établies avec les stations mobiles (MS),
dans lequel chaque station mobile (MS) possède une identification de station mobile (MSISDN) et à chaque liaison établie avec elle est affectée temporairement une identification de liaison (TMSI),
**caractérisé en ce que**, à l'aide d'un système informatique (4,5) connecté au système de radiocommunication mobile (PLMN) sont exécutées les étapes suivantes :
a) réception d'une demande de détermination de position pour une identification de station mobile (MSISDN) de la part de l'application (2),
b) envoi de l'identification de station mobile (MSISDN) à la banque de données de visiteurs (VLR) respective déterminée par la banque de données d'origine (HLR), banque de données de visiteurs dans laquelle est enregistrée la station mobile (MS), en tant que demande pour le renvoi de l'identification de liaison affectée (TMSI) et réception de celle-ci,
c) envoi de l'identification de liaison (TMSI) à la centrale d'exploitation et d'entretien (OMC) en tant que demande de renvoi des paramètres de transmission radio (L3) de la liaison affectée et réception des paramètres de transmission radio (L3), et
d) recherche de la position (X/Y) à partir des paramètres de transmission radio (L3) reçus et envoi de la position (X/Y) à l'application (2).

2. Procédé selon la revendication 1, **caractérisé en ce que** la liaison citée est effectuée entre la station mobile (MS) et l'application (2).

3. Procédé selon la revendication 1 ou 2, **caractérisé en ce que** les paramètres de transmission radio cités comprennent la durée du signal de radiocommunication (TA), le niveau de réception (Rxₛᵥ) et/ou l'identification de cellule (CIₛᵥ) de la cellule effectuant la liaison.

4. Procédé selon la revendication 3, **caractérisé en ce que** les paramètres de transmission radio cités comprennent également les niveaux de réception (Rxᵢ) et les identifications de cellule (Clᵢ) des cellules voisines pouvant être reçues par la station mobile (MS).

5. Procédé selon la revendication 3 ou 4, **caractérisé en ce que** les paramètres de transmission radio cités (L3) sont obtenus à partir du jeu de données de mesure (couche 3) (L3) de l'interface radiocommunication - station mobile de la norme GMS.
